# EUROPEAN PATENT SPECIFICATION

(11) **EP 2 812 272 B1**
(45) Date of publication and mention of the grant of the patent: **21.09.2016**
(21) Application number: 13713236.1
(22) Date of filing: 08.02.2013
(51) Int. Cl.: B65H 49/32, B65H 61/00, A47F 7/00, G01B 5/04

(54) **DELIVERY UNIT FOR PRODUCTS PURCHASABLE BY LENGTH AND METHOD TO SUPPLY SUCH PRODUCTS**
FÖRDEREINHEIT FÜR NACH LÄNGE ERWERBBARE PRODUKTE UND VERFAHREN ZUR FÖRDERUNG SOLCHER PRODUKTE
ENSEMBLE DE DISTRIBUTION POUR DES PRODUITS POUVANT ÊTRE ACHETÉS PAR LONGUEUR ET PROCÉDÉ DE DISTRIBUTION DE CES ARTICLES

(30) Priority: 08.02.2012 IT MI20120173
(43) Date of publication of application: 17.12.2014
(73) Proprietor: MAGGI GROUP S.p.A., 23854 Olginate (LC) (IT)
(72) Inventor: MAGGI, Corrado, I-23896 Sirtori LC (IT); RISPOLI, Marco, I-23854 Olginate LC (IT)
(74) Representative: Faggioni, Carlo Maria
(86) International application number: PCT/IB2013/051045
(87) International publication number: WO 2013/118087

(56) References cited:
- EP-A1- 0 721 096
- GB-A- 969 602
- US-A- 4 537 106
- US-A- 4 538 775

## Description

### FIELD OF THE INVENTION

The present invention refers to a display assembly for items which may be purchased by length, in particular such a display assembly for department stores and shopping centres, as well as to the delivery and sales method associated therewith.

### STATE OF THE PRIOR ART

As known, in business products which are not sold by unit or by weight, but have a purchase price proportional to the length thereof exist. Such products are typically cordage of a various nature (natural fibres, synthetic fibres, metal strands, ...), metal chain, electric wires for electric systems, hoses and so on.

The display and management of these products implies some problems connected with the management of the reels, whereon these products are wound for transportation from the manufacturer to the retailer, and with the delivery of the length desired by the purchaser upon the retailing.

In order to simplify the approach, in many cases one tends to define standard item lengths, so as to create packages - containing that item in a predefined length - which can then be more practically sold by unit. One can think of packages of ready-made extension wires, or of packages of precut irrigation pipes or similar cases. Of course this solution in many cases is not at all appreciated, neither by the seller - who has to manage a plurality of stocked items - nor by the purchaser who is forced to compromise purchases which are often unsatisfactory.

The alternative proposed so far at the current state of the art, is to provide display assemblies wherein the individual items are wound in long length on corresponding reels, from which the user takes and cuts the desired length.

This implies cutting to measure the product and keeping somehow track of the withdrawn length, so that at the payment point (typically at the check outs of the store) the purchase can be correctly recorded. Evidently, in small stores, with a strongly personalised service, that is not a problem, because the operator who provides to deliver the product, cut it and record it is always the same. In the context of department stores and large-scale retail trade, instead, this process implies drawbacks, especially because it would be appreciated that the user could help himself without having to resort to any operator.

It normally happens that the user must involve an operator who goes to the display assembly, where the various reels of products are installed, he performs the cut to measure (based on the user's indications) and delivers the product together with a paper support whereon he writes the identification code of the specific product and the measure of the cut product. With the product and the paper support, the user goes to the point of payment, where another operator completes the recording. That implies the action of at least one operator at the display assembly and one operator at the point of payment.

In other cases, it is provided to equip the display assembly, in correspondence of each reel of product, with a pre-printed paper support, whereon the product code is already indicated, typically in the form of the bar code thereof. In these cases, the user can also deliver and cut independently the desired product length (which length he can measure with a metre or other tool made available at the display assembly) and mark the measure on the respective pre-printed paper support. With the filled-out paper support, the user then goes to the point of payment, where an operator enters the measurement and records it. In this case only one operator is necessary at the point of payment. However, problems of trust towards users exist, both in terms of filling-in correctness, and in terms of measuring skill. Moreover, a problem of management of the pre-printed paper supports exists, which supports represent further items to be managed in the warehouse and which hence imply additional logistics and replenishment problems for the shopping centre.

In order to help at least the product measuring phase, sometimes the availability of tools has been offered which are easier to use than a traditional self-retracting measuring tape: US 4,537,106 represents an example thereof. This document provides to arrange a counting device in front of the product reels, so as to count the product length as it is wound off the reel. This device is nevertheless little effective and intuitive, it is cumbersome to operate and does not solve the problem of making fully automatic the sales process.

US 6,129,796 concerns instead an apparatus mounted on a counter, which is used to perform the labelling of lengths of cordage to be sold in retail. The configuration of this apparatus is ill suited to a use by a non-specialised user; moreover, it is bulky and complex and it hence cannot be easily associated with a modular display assembly for large stores.

### PROBLEM AND SOLUTION

The object of the present invention is hence to provide a solution which solves all the drawbacks cited above, offering a display assembly for products sold by measure which makes the delivery and purchase process as automatic, simple, reliable as possible, preferably with no assistance from operators. A further object of the invention is to provide a system which is suited to the development of additional functions, such as the of the real-time economic estimation of warehouse and the automatic identification of the reorder point/levels, as well as the opportunity to assist the management of other products sold by unit.

### SUMMARY OF THE INVENTION

Said objects are achieved trough an improved display assembly and a delivery method of items sold by length, according to the independent claims herewith attached. The dependent claims describe preferred features of the invention.

### BRIEF DESCRIPTION OF THE DRAWINGS

Further features and advantages of the invention will in any case be more evident from the following detailed description of some preferred embodiments, given purely by way of non-limiting example and illustrated in the attached drawings, wherein:
fig. 1A is a perspective view of a first exemplifying display assembly according to the invention;
fig. 1B is an elevation front view of a display assemply according to a further preferred embodiment of the invention, obtained by coupling two modules as in fig. 1;
fig. 2 is a front, partly interrupted view of an embodiment of the counting device with which the display assembly of fig. 1B is provided;
fig. 3 is a side elevation view of the embodiment shown in fig. 2;
figs. 4A-4C are views similar to that of fig. 3, with parts removed, of a sequence of use of the counting device according to the invention;
figs. 5A and 5B are side elevation and perspective views, respectively, of an exemplifying viewing device employed in the system according to the invention;

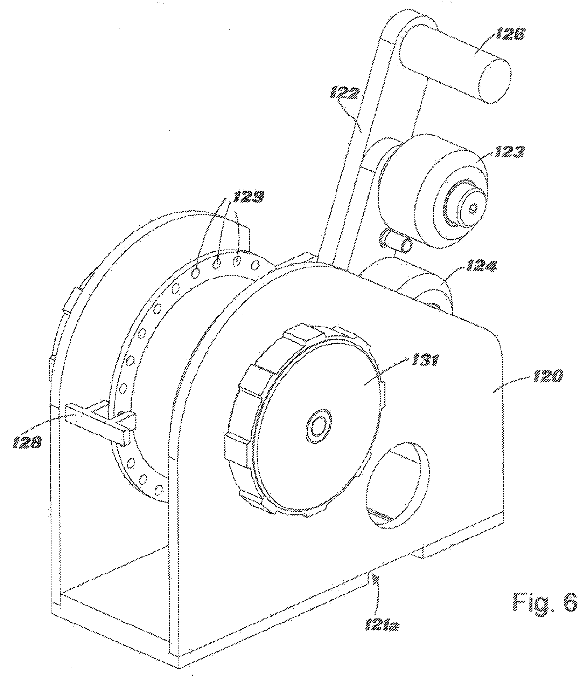

fig. 6 is a perspective view of the counting device according to fig. 3;
figs. 7A-7D are schematic views of a sequence of use of the viewing, input and printing device, according to a preferred embodimet of the invention;
fig. 8 is a perspetive view of a counting device, according to another embodiment of the invention, mounted on the guiding rail thereof;
fig. 9 is an enlarged perspective view of the sole counting device of fig. 8;
figs. 10A and 10B are front and side elevation views, respectively, of the device of fig. 9;
fig. 11 is a view similar to that of fig. 3, relative to the counting device of fig. 8 in a delivery position;
fig. 12 is a view similar to that of fig. 11, with the counting device in a loading position;
figs. 13A and 13B are rear elevation views of a blade cutting module, in a closed and in an open position, respectively; and
figs. 14, 15A and 15B are views similar to that of figs. 13A and 13B relative to a cutting module for a metal chain.

### DETAILED DESCRIPTION OF THE PREFERRED EMBODIMENTS

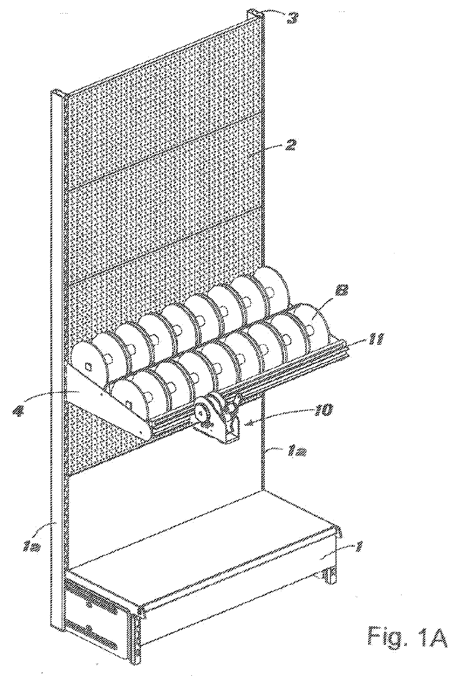

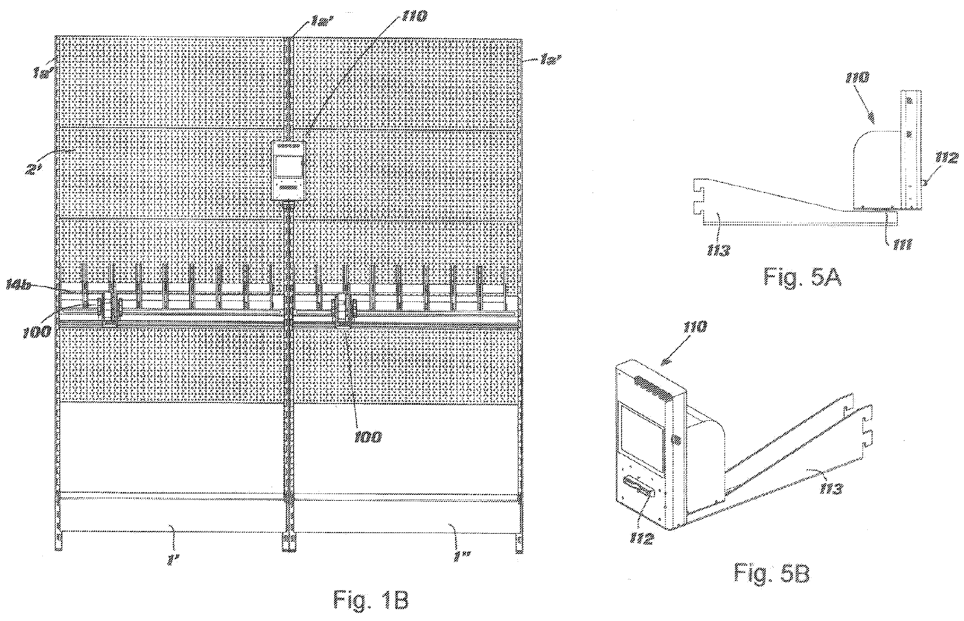

Fig. 1A shows an exemplifying display assembly. It comprises, in a manner known per se, a base 1, a pair of posts 1a between which a rear panel 2 is applied and a possible top shelf 3. This display module may be housed in multiple adjoining specimens, for example, in an aisle of a department store. Fig. 1B, for example, shows two adjoining ones thereof. Rear panel 2 or posts 1a are configured so as to be able to fasten one or more standard supports to support a plurality of reels B of a product which can be sold by measure, for example a metal chain or a synthetic rope.

Fig. 1A shows support in the shape of a shelf 4 which supports a pair of spindles whereon a plurality of reels B mounted idle in rotation is loaded. Evidently on the same display assembly multiple shelves 4 or other types of support for reels B can be prepared.

Fig. 1B, for example, shows two laterally adjoining display modules, each one equipped with an own base 1' and 1" and provided with respective shelves.

On the display assembly there is furthermore arranged at least one counting device 10, 100, apt to measure the length of a thread-like product which is dragged through there, and an associated viewing and printing device 110.

For such purpose, counting device 10, 100 is mounted on the display assembly downstream of reels B, in the unwinding direction of the product to be sold by measure. The thread-like product is arranged so as to unwind from reel B, enter a measuring passage of counting device 10, 100, come out from a dispensing window and then end with aterm inal portion which can be handles by the user's hands.

In the two embodiments illustrated in figs. 1A and 1B, counting device 10, 100 is mounted horizontally sliding on a rail mounted integral in the front part of each shelf 4. Thereby, the counting device can be linearly displaced along the row of reels B and can be arranged opposite the reel which is to dispense the desired product at that time: product dispensing can hence occur in a regular manner, i.e. in a direction substantially crosswise to the reel rotation axis, which orientation is preferable to avoid jams.

For example, in the embodiment illustrated in fig. 1B, the two display modules overall comprise one counting device 100 for each shelf.

As an alternative, the counting device can be mounted on a pantograph-like support, so as to be able to be displaced both horizontally and vertically opposite desired reel B. A further simplified embodiment provides for the counting device to be mounted in an orientable way in a fixed position on the display (for example at one end of a shelf), possibly assisted by a rotary transfer pulley which allows to align the path of the thread-like product with the direction of the tension applied thereto during dispensing.

Preferably, as will also be highlighted further on, the counting device is installed aboard a carriage 120 in turn provided, on the side thereof facing towards the shelf, with a product recognition sensor. Thereby, it is provided a system for the automatic recognition of the product opposite which the counting device is stationing and which is presumably about to be dispensed. For example, the recognition sensor is an optical reader for a bar code arranged on the sliding rail of counter 10, 100 arranged in correspondence of each reel; instead of a bar code, a small transponder (RFID) can be provided, to be read through an antenna arranged aboard carriage 120.

According to the invention, there is furthermore provided at least a viewing device 110 apt to show the user some indications useful for the dispensing of the product sold by length, such as the type of chosen product, the unitary price, the dispensed length, the overall price and more, according to the manner illustrated in the following. Viewing device 110 is associated with a logic processing unit (not shown) - with which the processing necessary for the operation of the apparatus is performed - and with a printing unit 112 (preferably integral with the viewer, as shown in fig. 5B) suited to transfer onto a paper support (such as a commercial receipt) the same information displayed or an account of the dispensing operation which is easily and automatically recordable at a checkout point of the store.

Each counting device 10, 100 could comprise an own embedded viewing device. Alternatively, preferably a single viewing device 110 is provided for the entire display assembly (fig. 1B), arranged in an area clearly visible to the user during the dispensing of the products. For such purpose, preferably the viewing device 110 is mounted adjustable on a tilting support 111, for example on a spherical support which allows the left/right rotation and the upward/downward tilting, so that it can be oriented in the way most comfortable for the user. As illustrated in fig. 5B, the orientable support 111 with the relative viewing device 110 is fastened, for example, to a distal end of a bracket 113 which can be fastened in the traditional way to panel 2' or to the posts 1a' of the display module.

In this case, electric connection wires are furthermore provided between the individual counting devices 100 and the logical unit of viewing device 110. Such electric wires (not shown) are made to pass inside a section bar of each support shelf, until they converge to device 110. Wherever it is deemed convenient, instead of the electric wires it is possible to use any one of the wireless data transmission techniques, for example data transmission through the Bluetooth^{®} protocol, so as to connect the individual counting devices 100 with the processing logic unit (installed in the viewing device 110 or in another position).

According to another advantageous aspect of the invention, a data input unit is furthermore provided, through which the user enters some parameters useful for the operation of the entire system or, optionally, launches requests for information or for assistance which are supplied through viewing device 110 or printing unit 112. Preferably, according to the embodiment illustrated, the data input unit is in the form of a touch-screen coinciding with the screen of viewing device 110.

In the following the various components are illustrated in greater detail.

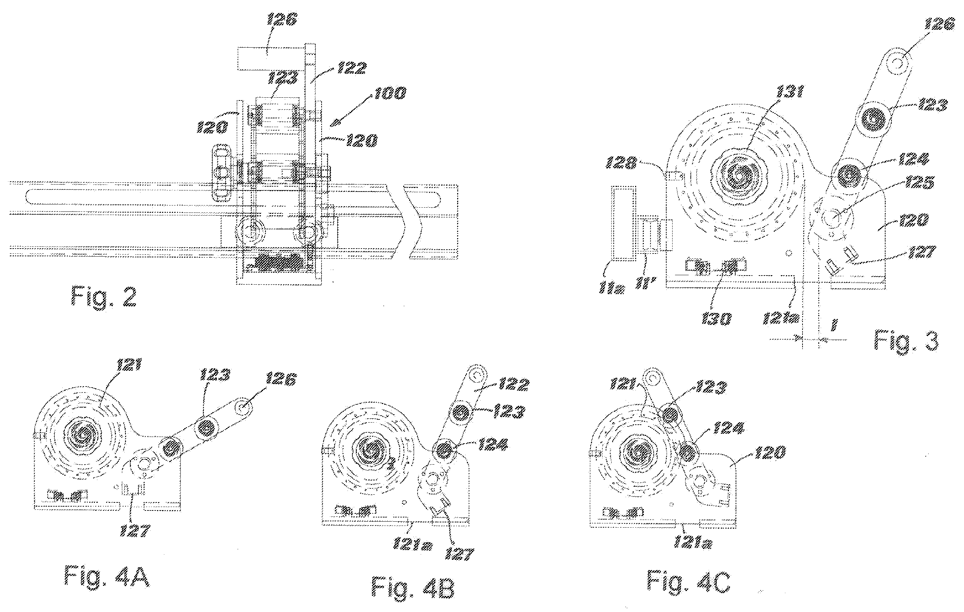

Figs. 2-4C show a first embodiment of counting device 100.

Such device substantially comprises a supporting carriage 120 whereon a counting drum 121 is mounted in a rotary manner and an actuation lever 122 provided with engagement counterrollers 123 and 124 is also mounted in a rotary manner.

Carriage 120 is slidably mounted on a horizontal rail of each support shelf.

Actuation lever 122 is mounted pivoting on carriage 120, in a front position (with respect to the user's use position) with respect to counting drum 121, i.e. on the side opposite to the rail with respect to drum 121. On lever 122 the two counterrollers 123 and 123 are mounted idle, with rotation axes parallel to those of drum 121 and arranged at a certain mutual distance. For example, without this being considered limiting, the two counterrollers have a diameter of about 3 cm and are arranged at a mutual distance of 5-8 cm along lever 122, so as to engage with a drum 121 having a diameter of about 12-15 cm determining an arc subtended between the two counterrollers of the order of 40-45°.

Between the two counterrollers 123 and 124 and drum 121 the threadlike product (cordage, chain, wire, tubular element, ...) object of the purchase from the display assembly is meant to transit. In order to improve the surface coupling with the product, the surface of the drum and of the counterrollers is preferably lined with rubber or treated, so as to increase the friction coefficient without, however, creating excessive roughness which could impair the integrity of the product.

Actuation lever 122 is hinged in the point marked as 125 in fig. 3, where a small shaft/rotation axis is installed. Lever 122 preferably comprises also an actuation handle 126, arranged at the upper end, and a halt element 127, arranged on the opposite side of hinge 125 with respect to counterrollers 123 and 124. Between the rotation shaft mounted in 125 and drum 121 there is provided a gap I having a width sufficient for the thread-like product to transit, the length of which must be measured. Gap I is arranged above an area wherein the free fall of the thread-like product is not hindered, for example in correspondence of an opening 121a practised on the lower side of carriage 120.

Preferably, lever 122 is configured so that, with a preset non-operational orientation, halt element 127 intercepts the path of the thread-like product coming from gap I. Thereby, when the lever is in the non-operational position (opening), the thread-like product finds an abutment on halt element 127 and cannot freely transit throught carriage 120 and hence counting device 100. For such purpose, for example, halt element 127 is in the shape of a simple platelet (as visible in the drawings) which closes the passage between gap I and opening 121a on the bottom of carriage 120: the thread-like product which passes between drum 121 and counterrollers 123 and 124, in its downward fall (due to simple gravity), is hence hindered by halt platelet 127 and cannot come out of device 100. Such operation mode has the function which will be better illustrated in the following.

The lever is preferably kept in two stable positions, open and closed, by suitable elastic retaining means (not shown). Typically, the open position of fig. 4A and the closed position (operational) of fig. 4C are steadily maintained through a thrust of the elastic means, the passage from one to the other being able to occur only by overcoming the elastic bias of the elastic retaining means.

Counting device 100 furthermore comprises a detection device of the rotation of drum 121. For example an optical revolution-counting sensor 128 arranged in the proximity of a flange 129 of drum 121 is provided. On the flange marks or holes are obtained, at a constant pitch from one another, which can be detected by the revolution-counting sensor 128 so as to obtain a signal proportional to the rotation of drum 121.

Many other different detection devices can be implemented to obtain a signal proportional to the rotation of drum 121.

Sensor 128 is connected to an electronic unit, for example an electronic circuit 130 mounted on the same carriage 120, meant to transfer the signal which indicates the extent of the rotation of drum 121 to the logical unit which controls the system and interacts with viewing device 110. The rotation signal is used to have an indication of the length of the dispensed thread-like product, which is caused to transit in counting device 100 adhering to drum 121, so that the peripheral displacement of drum 121 matches exactly the length of product which has travelled thereabove.

The rotation detection made on the flange of drum 121 is advantageous because it allows to detect an amplified displacement, performed on a portion of drum where the radius is longer than the radius of the sliding area of the thread-like product: that ensures greater accuracy and measuring certainty.

Preferably, finally, carriage 120 is provided with a feed knob or wheel 131 which is integral with the rotation axis 125 of drum 121. Knob 131 can be used by the user to manually cause a rotation of drum 121 in some operation steps, typically in the initial step starting the device, as shown in the following.

With reference to the sequence illustrated in figs. 4A-4C, the operation of the system according to the invention is the following.

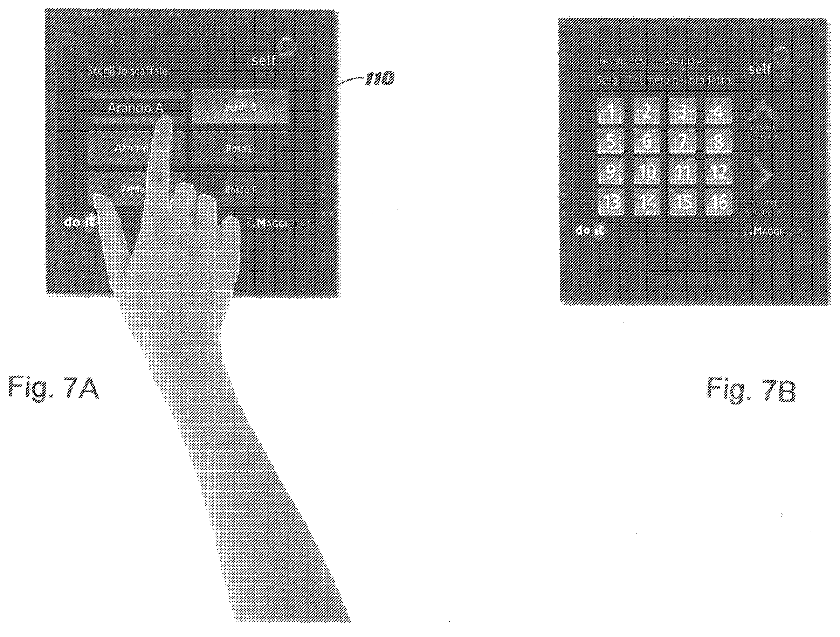

Initially the user moves counting device 100 to be opposite reel B from which he wants to take the thread-like product by measure. Then he adjusts the orientation of viewing device 110 so as to be able to observe it easily from the position in which he finds himself opposite the display assembly. Through a suitable graphic interface, the user enters data relative to the choice of the shelf and of the individual reel of product. For example, as exemplifyingly illustrated in figs. 7A and 7B, using a touch-screen of the viewing device 110, the user chooses the colour of the shelf and, in the following screenshot, the number of the desired product.

This choice is useful for two reasons. On the one hand, to provide confirmation information to the user and, on the other hand, to possibly provide a correction parameter to the logical processing/counting unit. As a matter of fact, based on the user's choice, the logical processing unit identifies the specific product in an own, internal database and displays on viewing device 110 the name of the chosen product and the unitary price thereof: the user can thus have confirmation of the purchase he is making. Converesly, the choice of the product is used by the logical processing unit also to possibly use correction parameters when counting the dispensed measure, which is obtained based on the rotation signal coming from drum 121: based on the fact that a tape, a rope or a chain (which have different thicknesses, flexibility and friction coefficients) are dispensed, it may indeed be necessary to use a correction factor to obtain the correct measurement based on the rotation of drum 121.

In case on carriage 120 a product detection sensor is installed, the user does not have to make a choice. More simply, when the user opens actuation lever 122 to introduce the product, the counting device automatically sends a signal to the logical processing unit, determining which counting device (of the various ones possibly found on the same display assembly) is operational and the type of product which has been recognised and is being dispensed.

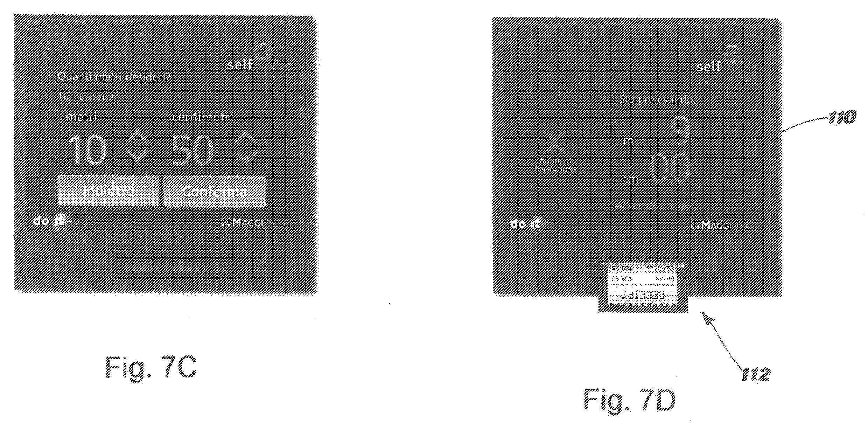

Once the confirmation of the correct product has been received, through the input unit the user sets the desired measure of length, for example through the same touch-screen interface which shows a length expressed in digital numbers (fig. 7C). The user confirms the product and the desired length. After that, he manually takes the free edge of the product coming from chosen reel B and introduces it into gap I - between drum 121 and pivoting pin 125, after having pulled towards oneself lever 122 so as to kickstart counting device 100 (fig. 4A). For such purpose, the displacement of lever 122 is detected by a microswitch (not shown) or presence sensor connected to the logical processing unit, at least to detect the operation position (closed).

Preferably, the microswitch or other more precise displacement sensor (for example a magnetic sensor of the angular rotation of the lever) is capable of determining if upon procedure start a product is already inserted in the counting device, arranged between drum 121 and counterrollers 123, 124. Since counting resetting would be erroneous, should the sensor detect product presence in the device, before allowing procedure start, through viewing device 110 the user is prompted to fully remove the product and to re-introduce it after procedure reset.

With lever 122 in an open orientation, the thread-like product can be introduced in the counting device, until it abuts against halt element 127 (the user can realise this observing from above or from a small window found on the side of carriage 120).

At this point the user can close counting device 100, pushing lever 122 towards drum 121, so as to free the path towards the exit of opening 121a (fig. 4B) and to bring counterrollers 123 and 124 under pressure (due to the elastic abutment means) toward the surface of drum 121. Thereby, the thread-like product is coupled and pushed to rest against drum 121, with a certain pressure determined by the two counterrollers 123 and 124: the sliding of the thread-like product can hence translate into a corresponding rotation of drum 121.

Any rotation of drum 121, after having set the product on viewing device 110 and having closed lever 122, is detected by sensor 128 and translated into a linear measurement of the product by the logical processing unit.

In the initial step, the user can cause drum 121 to rotate by acting on knob 131, so as to cause the thread-like product to flow. Once the product has crossed window 121a and has arrived visible below counting device 100, it can also be grabbed by hand and dragged more comfortably to the desired measure, leaving free knob 131.

If upon procedure start the desired measure is set, the user can detect on viewing device 110 a top-down counting of such preset measure, as the counting device detects the progressive dispensing of the product.

Once the desired measure has been reached, the user ends the withdrawing of the product an provides to cut the same. Typically the cut can occur by a suitable tool made available in the proximity of the display assembly - in the proximity of the exit 121a of counting device 100, i.e. in the proximity of the position in which the automatic length counting has occurred.

Once the product has been cut, the user interacts again with the viewing device, for example pushing a suitable button on the touch-screen, signalling the end of the operation. Thereby, the measure of dispensed product is ultimately recorded by counting device 100 and a corresponding receipt is printed by printing unit 112 (fig. 7D). Alternatively, the logical processing unit can be configured so as to terminate the process should it not detect a rotation of drum 121 for a certain time interval, for example 20 seconds.

Preferably, for reasons of safety and recording correctness, the logical processing unit resets the entire process, preventing receipt printing, whenever lever 122 is displaced from its working (closed) position illustrated in fig. 4C.

The receipt reports the data necessary for completing the payment operations at the check-out. For example it may report a bar code directly readable by the optical scanner of the checkout, as well as other uncoded information, such as the product code and name, the dispensed length and the unitary/overall cost.

The user hence, delivering at the checkout the receipt completes the automatic purchase process, without any operator having had to intervene in any way.

Having the information relative to the dispensed and sold amount, the logical unit aboard the system according to the invention makes it possible for various other automatic actions which improve the functioning of the display and the sales process to occur. For example, the data of dispensed product can be sent to a recording system wherein the amounts and values of goods initially loaded on the display assembly are compared, so as to be able to have in real time the currently residual value (warehouse), the reorder point thresholds, the statistics on product rotation within the stock (useful for marketing operations) or other.

Moreover, if carriage 120 or counting device 110 is provided with product recognition sensor, it is possible to perform a similar dispensing and sales process even for other unitary products displayed on the same display assembly. These unitary products (such as tools, consumable materials, unitary packages of metal nuts and bolts, ...) are thus assembled in a minimal package, barely sufficient to add a recognition code readable by the recognition sensor. The user can hence move the individual packages in front of the sensor installed on counting device 100 and obtain all the information on the product directly on viewer 110, whereon he can furthermore confirm the purchase to obtain the printout of the receipt to take to the checkout.

In order to complete automatically the evaluation operations of the display assembly, the logic installed on the recording device (coinciding with the viewing device in the described embodiments) preferably provides also a goods loading procedure. In other words, an operator can enable a specific procedure through which he loads the amounts of products on the display assembly and at the same time records them on the recording device.

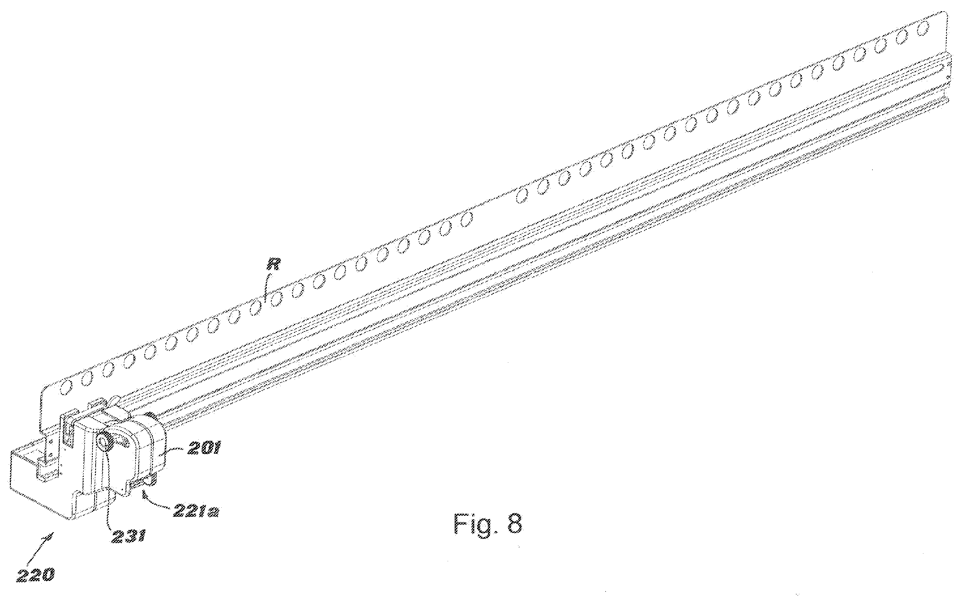

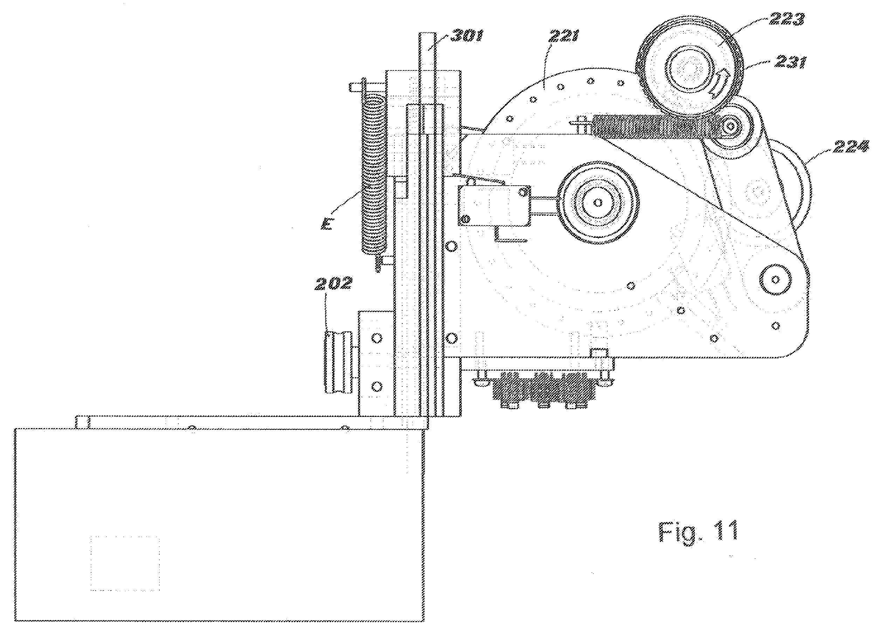

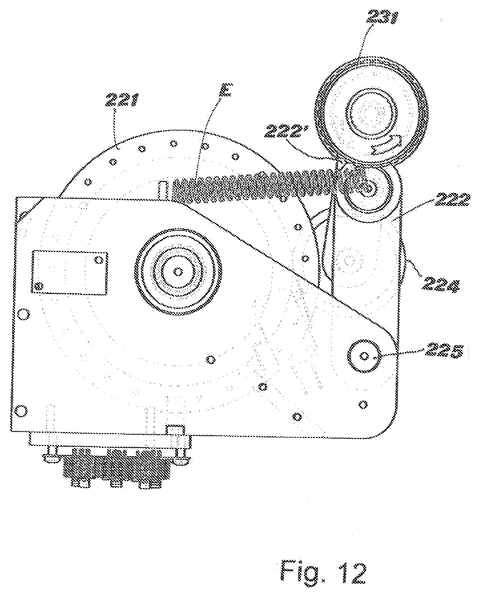

In figs. 8-12 a second embodiment is shown.

In such case, it is to be noted that the carriage 200 whereon the counting device is housed is suitably protected from intrusions by a bodywork 201.

Fig. 8 shows a guiding rail R provided, in the lower portion thereof, with a groove R' for the sliding of bearing wheels 202 of carriage 200.

In this case, the configuration of the counting device still has a counting drum 221 whereon two counterrollers 223 and 224 rest. These last ones are mounted at the ends of a connecting rod 222' hinged pivoting on a lever 222. Said last one is rotatingly hinged on axis 225 and biased towards drum 221 through elastic means E.

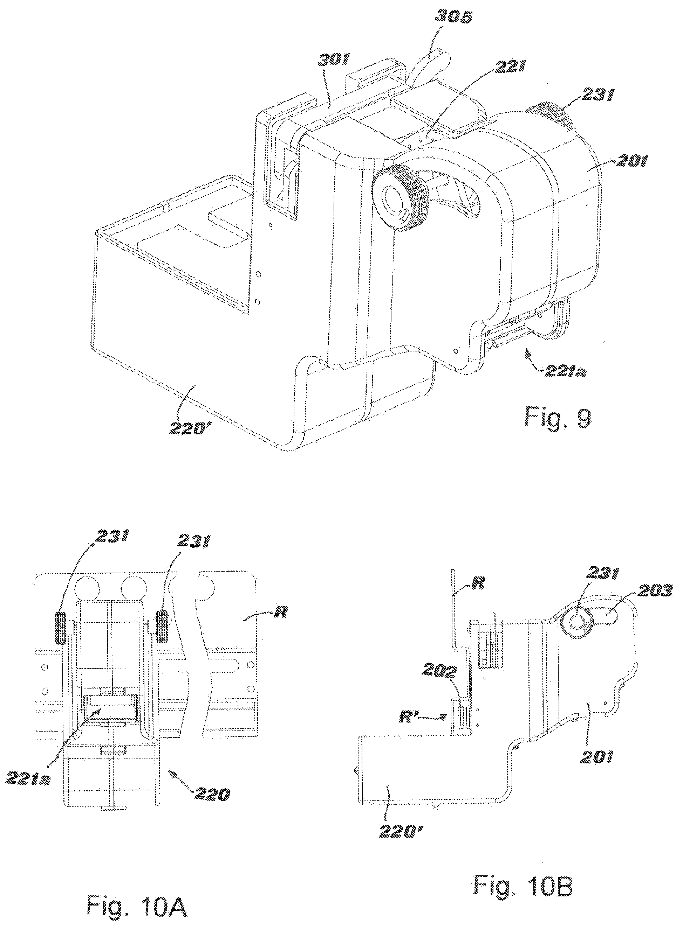

Knob-shaped means 231, for a manual rotation action, are provided integral in rotation with one of the counterrollers (instead of with the drum as in the preceding embodiment), preferably with upper counterroller 223. These knob-shaped means 231 make up the only moving part which protrudes from protection bodywork 201, through arched slits 203 (fig. 10B).

In order to make easier and more visible the introduction and removal of the thread-like product, a dispensing window 221a is provided on the front side of bodywork 201, instead of in the lower portion (as in the preceding embodiment described above).

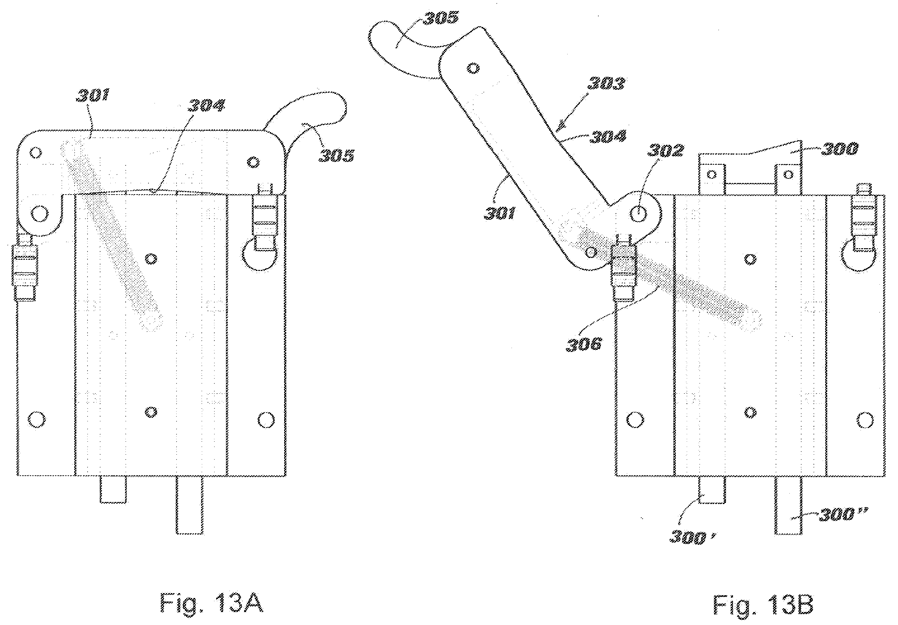

Figs. 13A-14B show instead two different types of cutting modules, both mountable - according to requirements - in the rear portion of carriage 120 or 220, i.e. between the counting device and the sliding guide. Figs. 13A and 13B show a hot-blade cutting module, suited in particular for cutting and cauterising synthetic ropes. In the upper portion of the module a metal blade 300 is installed, fastened with the cutting edge upwards. On one of the two sides of the blade a pivoting lever 301 is hinged, mounted so as to be able to rotate about a hinge 302 on a plane coinciding with the plane of blade 300, i.e. parallel to the rotation axis of counting drum. Lever 301 has a thin pocket, open along the edge opposite blade 300: accordingly, when the lever is caused to rotate and brought into the position of blade 300, said blade goes back into pocket 303, as shown by an interrupted line in fig. 13A. In order to ease the correct retainment of the rope to be cut, the active edge of pivoting lever 301 has a profile with a slight V having its vertex 304 arranged centred with respect to blade 300. Moreover, in order to ease operation, lever 301 is preferably provided with a small grip 305 for the fingers, mounted at the end opposite to that of hinge 302, as well as an elastic element 306 (typically a spring) mounted so as to bias lever 301 towards the two extreme, full-closure position (fig. 13A) or full-opening position (fig. 13B), so as to make said positions stable and avoid as much as possible an improper use by the users. Finally, cutting blade 300 is preferably mounted on two electrodes 300' and 300'' through which a low-voltage current is supplied which makes the blade hot and eases both cutting and the subsequent cauterising. In order to be able to operate in low voltage, it is preferably provided to install a current transformer inside the bodywork 201 of carriage 220, for example in a lower housing body 220' below the cutting module; the transformer typically transforms current from the mains voltage (for example 220 V) to the operating voltage of hot blade 300.

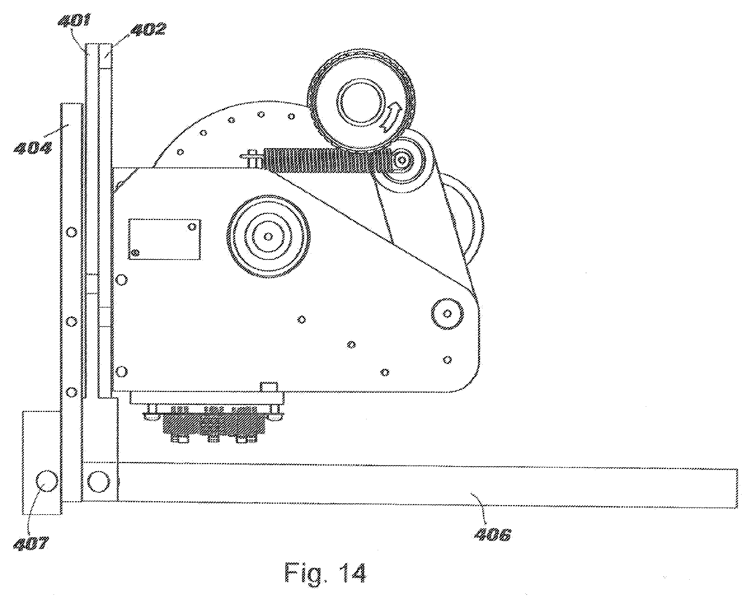

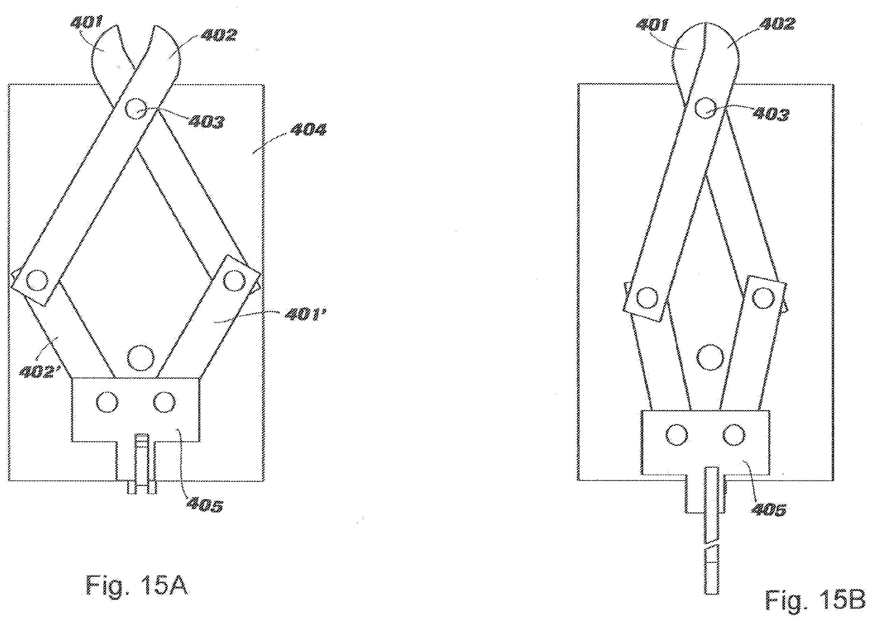

Figs. 14-15B show instead a cutting module for a metal chain. In this case, a pair of shear jaws 401 and 402 is provided, hinged in a fixed position 403 on a support plate 404 integral with the carriage of the counting device. The two jaws 401 and 402 continue beyond hinge 403 with an extension which acts as crank of a connecting rod/crank mechanism; the respective connecting rods 401' and 402' are hinged to a cursor 405 linearly sliding in an alternate manner to and from the hinge of jaws 403, i.e. - in the illustrated embodiment - upwards and downwards; cursor 405 is in turn controlled in motion by a transfer lever 406, hinged on a pin 407 having an axis orthogonal to that of hinge 403 and arranged behind plate 404 (see fig. 14). With this construction, a lowering of lever 406, pivoted on pin 407, causes a lowering of cursor 405 and hence a moving closer together of the two jaws 401 and 402 around hinge 403 (fig. 15B). In substance, to be able to cut a metal chain between the jaws 401, 402 of the shear, it is sufficient for a user to lower lever 406 with a minimal effort. The reopening of jaws 401, 402 can be assured by a manual return of lever 406, or by elastic means (not shown) which automatically bias the lifting of lever 406.

Since, in both cases, the cutting module of the product is arranged behind counting drum 121, 221, the cutting occurs upstream of the measuring position: this constant measuring offset is set in the logic of the measuring system, so that the counting and the overall recording of the dispensed product takes into account this length of product upstream of the detecting position.

As can be well understood, with the display assembly provided with the counting and recording system accordnig to the invention, the objects set forth in the premises are perfectly achieved.

As a matter of fact, the display assembly according to the invention, allows to install a plurality of reels of products sold by length and to provide a product dispensing and recording tool which is easily used by the purchaser, without any operator's intervention. The display assembly according to the invention requires only a software configuration of the logical processing unit, to supply the data and the relative prices of the products mounted on the reels: for such purpose one can act through the same input unit (graphic interface) used by the purchasers (in "administration" mode) or by connecting a portable computer (with suitable communications protocol software) to the logical processing unit according to ways known per se.

The extreme construction simplicity of the counting device and the interaction thereof with the associated viewing/input device and the printing unit, makes extremely intuitive the dispensing and recording operations for the user and greatly reduces any possible maintenance activity. Which contributes to high effectiveness and productivity of the display assembly according to the invention.

The dispensing of a full recording receipt eliminates also any further burden by the staff at the checkout point, so that the purchase can occur without employing additional resources with respect to the traditional purchases of the products solds by unit.

Finally, the availability of reliable and automatic data on the shelf products and of the dispensed amounts, opens the system to important developments in the commercial process, in terms of sales simplicity, automatisation of the reorders and statistics for marketing purposes.

However, it is understood that the invention is not limited to the particular embodiments illustrated above, which make up only non-limiting examples of the scope of the invention, but that a number of variants are possible, all within the reach of a person skilled in the field, without necessarily departing from the scope of the invention.

For example, as seen above, halt means 127 can be replaced or assisted by a presence sensor, which detects the position of the thread-like product within the counting device and automatically resets the condition of the logical unit to start the length counting. The residual product detection in the counting device dos not allow the zeroing of the counting process and the starting of the dispensing procedure, until the user has reset the system in the desired starting conditions.

The counting device can furthermore be provided with halt means acting on drum 121, so that the halting of the drum can be automatically controlled - and so the dispensing of the product - when the logical processing unit detects that the desired product length has been dispensed (previously set on the viewing device by the user). That would enable the user to not even monitor the top-down counting displayed on the viewing device, but to simply remove the thread-like product until the rotation of the drum is automatically blocked by the braking means upon reaching the desired length. Moreover, it is understood, that the counting of the desired product measure need not occur in a top-down manner, but can appear on the viewer in a manner simply proportional to the dispensed length, starting from zero: in such case the halt is fully arbitrary and user-defined.

Moreover, advantageously, the rotation sensor or alternative measuring means of the rotation can be configured to determine also the direction of rotation of the drum. That allows to send to the logical processing unit both a positive and a negative measuring signal: thereby the user can also go back in the product dispensing, for example by partly rewinding the thread-like product reel, should he change his mind or should he have to remedy erroneous excessive pulling out. The correct product measuring and recording, in substance, occurs regardless of the dispensing/rewinding mode chosen by the user.

Although in the description reference has always been made to fully manual dispensing, the opportunity of motorising the rotation of the counting drum or of one of the counterrollers falls within the teachings offered here. In such case the control software comprises a part of motorisation management, which saves the user to have to pull the thread-like product from the dispensing window. The motor can then be controlled by the user through the touch-sensor display.

## Claims

1. Display assembly for a plurality of thread-like products sold by length, comprising at least one display module provided with a plurality of reels (B) of said thread-like products and having a dispensing path for each thread-like product whereon a counting device (10, 100) is installed, apt to measure the length of thread-like product which runs therethrough, said counting device comprising
a counting drum (121, 221) mounted in rotation on a support carriage (120, 220),
**characterised in that** said counting device further comprises
an oscillating lever (122, 222), mounted tilting opposite said counting drum (121, 221) and provided with at least one pressure counterroller (123, 223, 124, 224) apt to push said thread-like product in contact coupling with said counting drum (121, 221) when the lever is biased into a closed/working position by elastic means (E), said lever being able to switch from said closed/working position to an open/non-working position overcoming the bias of said elastic means (E),
detection means of the rotation of said counting drum (121, 221) apt to issue a measuring signal proportional to the rotation of the drum (121, 221) to a logical processing unit interfaced with a viewing device (110) and a printing unit (112),
said logical processing unit calculating the length of dispensed thread-like product based on said measuring signal received at least for the period of time wherein said tilting lever (122, 222) is continuously in said closed/working position.

2. Display assembly as claimed in claim 1, wherein said support carriage (120, 220) defines a run-through gap (I), between said counting drum (121, 221) and said at least one counterroller (123, 223, 124, 224) with said lever (122, 222) in an open/non-working position, as well as an output opening (121a, 221a) from which said thread-like product is dispensed.

3. Display assembly as claimed in claim 2, wherein halt means (127) are furthermore provided, controlled by said tilting lever (122), apt to obstruct the path between said gap (I) and said output opening (121a) when the lever is in said open/non-working position.

4. Display assembly as claimed in claim 1, 2 or 3, wherein a plurality of counting devices (10, 100) is provided, at least in an amount equal to the number of rows of supported reels, and a single viewing device (110) with corresponding printing unit (112).

5. Display assembly as claimed in any one of the preceding claims, wherein said counting device (10, 100) is mounted slidable on a respective sliding rail (R).

6. Display assembly as claimed in any one of the preceding claims, wherein said viewing device (110) is associated with a data input unit through which a user enters at least a desired dispensing length, said desired length being viewed on said viewing device (110) with top-down counting mode with the progress of said logical processing unit calculating the length of dispensed thread-like product.

7. Display assembly as claimed in any one of the preceding claims, wherein on said transport carriage (120, 220) a cutting module for said thread-like product is provided.

8. Display assembly as claimed in claim 7, wherein said cutting module is arranged behind said counting drum (121, 221).

9. Display as claimed in claim 7 or 8, wherein said cutting module has a hot blade (300) with which a pressure lever (301) cooperates, mounted pivoting on a plane parallel to the rotation axis of said counting drum (121, 221).

10. Display assembly as claimed in claim 7 or 8, wherein said cutting module has a pair of jaws (401, 402) of shears articulated around a hinge (403) mounted on a plate (404) integral with said transport carriage (120, 220), said jaws (401, 402) being part of respective rod/crank mechanisms controlled by an actuation lever (406) housed at least in part below the counting device (10, 100).

11. Dispensing method of a plurality of thread-like products sold by length and supported on a plurality of reels mounted on a display module, comprising the steps of
- arranging a counting device (10, 100), apt to measure the length of the thread-like product which runs through it, in a dispensing path of said thread-like product, **characterised in that** it furthermore comprises to
- tilting an oscillating lever (122, 222), mounted tilting opposite a rotating counting drum (121, 221), in a non-working position to allow the introduction of the thread-like product in the counting device,
- bringing back, through elastic bias means, said tilting lever (122, 222) in a working position pushing against said counting drum (121, 221), so as to push said thread-like product in contact coupling with said counting drum (121, 221),
- acquiring a measuring signal proportional to the rotation of said counting drum (121, 221) through a rotation sensor and sending said measuring signal to a logical processing unit interfaced with at least one viewing device (110), a data input unit and a printing unit (112),
- calculating through said logical processing unit the length of dispensed thread-like product based on said received measuring signal, at least for the period of time in which said tilting lever (122, 222) is continuously in said working position.

12. Method as claimed in claim 11, wherein said working position of the tilting lever (122, 222) is detected by said logical processing unit to determine the period of time during which to perform said calculation of the length of thread-like product.

13. Method as claimed in claim 11 or 12, wherein it is furthermore provided that said logical processing unit has a memory in which a database of the products and corresponding prices by unit length is stored and, based on said calculation of the length of dispensed thread-like product, said logical unit causes the associated printing unit (112) to issue a receipt with recording data of the dispensed product.

14. Method as claimed in any one of the claims 11 to 13, wherein it is furthermore provided to
- set a desired length through the input unit (110),
- through said viewing device (110), to view a measure of length as top-down counting from said desired length based on said calculation of the length of dispensed thread-like product.

15. Counting device for a display assembly and a method as claimed in any one of the preceding claims, the counting device comprising a counting drum (121, 221) mounted in rotation on a support carriage (120, 220), an oscillating lever (122, 222), mounted tilting opposite said counting drum (121, 221) and provided with at least one pressure counterroller (123, 223, 124, 224) apt to push said thread-like product in contact coupling with said counting drum (121, 221) when the lever is biased into a closed/working position by elastic means (E), said lever being able to switch from said closed/working position to an open/non-working position overcoming the bias of said elastic means (E), detection means of the rotation of said counting drum (121, 221) apt to issue a measuring signal proportional to the rotation of the drum (121, 221) to a logical processing unit interfaced with a viewing device (110) and a printing unit (112), said logical processing unit calculating the length of dispensed thread-like product based on said measuring signal received at least for the period of time wherein said tilting lever (122, 222) is continuously in said closed/working position, and wherein a product detection sensor is furthermore provided suited to detect an identification mark associated with each product to be dispensed which is arranged in a working position which is taken on by said counting device when it dispenses said product to be dispensed.

## Patentansprüche

1. Auslagezusammenbau für eine Vielzahl von garnartigen Produkten, die nach Länge verkauft werden, umfassend wenigstens ein Auslagemodul, das mit einer Vielzahl von Spulen (B) der garnartigen Produkte bereitgestellt ist und einen Abgabeweg für jedes garnartige Produkt aufweist, worauf eine Zählvorrichtung (10, 100) installiert ist, die geeignet ist, die Länge des garnartigen Produkts, das durch diese läuft, zu messen, wobei die Zählvorrichtung eine Zähltrommel (121, 221) umfasst, die in Rotation auf einem Trägergestell (120, 220) montiert ist,
**dadurch gekennzeichnet, dass** die Zählvorrichtung ferner einen einarmigen Hebel (122, 222) umfasst, neigbar montiert gegenüberliegend der Zähltrommel (121, 221) und bereitgestellt mit wenigstens einer Druckgegenrolle (123, 223, 124, 224), geeignet, um das garnartige Produkt in Kontaktkopplung mit der Zähltrommel (121, 221) zu drücken, wenn der Hebel durch elastisches Mittel (E) in eine geschlossene/betriebsfähige Position vorgespannt wird, wobei der Hebel in der Lage ist, von der geschlossenen/betriebsfähigen Position zu einer offenen/nicht-betriebsfähigen Position überwindend die Vorspannung des elastischen Mittels (E) umzuschalten,
Detektionsmittel der Drehung der Zähltrommel (121, 221), geeignet, um ein Messsignal proportional zu der Drehung der Trommel (121, 221) zu einer Logik-Verarbeitungseinheit auszugeben, die mit einer Ansichtsvorrichtung (110) und einer Druckeinheit (112) gekoppelt ist,
wobei die Logik-Verarbeitungseinheit die Länge des abgegebenen garnartigen Produkts berechnet, basierend auf dem Messsignal, das wenigstens für die Zeitdauer erhalten wird, in welcher der Kipphebel (122, 222) kontinuierlich in der geschlossenen/betriebsfähigen Position ist.

2. Auslagezusammenbau nach Anspruch 1, wobei das Trägergestell (120, 220) einen Durchlaufspalt (I) definiert, zwischen der Zähltrommel (121, 221) und der wenigstens einen Gegenrolle (123, 223, 124, 224), wobei der Hebel (122, 222) in einer offenen/nicht-betriebsfähigen Position ist, sowie eine Ausgabeöffnung (121a, 221 a), aus der das garnartige Produkt abgegeben wird.

3. Auslagezusammenbau nach Anspruch 2, wobei Haltemittel (127) ferner bereitgestellt sind, gesteuert durch den Kipphebel (122), geeignet, um den Weg zwischen dem Spalt (I) und der Ausgabeöffnung (121a) zu blockieren, wenn der Hebel in der offenen/nicht-betriebsfähigen Position ist.

4. Auslagezusammenbau nach Anspruch 1, 2 oder 3, wobei eine Vielzahl von Zählvorrichtungen (10,100) bereitgestellt ist, wenigstens in einer Menge gleich der Anzahl an Reihen der gestützten Spulen, und eine einzelne Ansichtsvorrichtung (110) mit korrespondierender Druckeinheit (112).

5. Auslagezusammenbau nach einem der vorangehenden Ansprüche, wobei die Zählvorrichtung (10, 100) gleitfähig auf einer entsprechenden Gleitschiene (R) montiert ist.

6. Auslagezusammenbau nach einem der vorangehenden Ansprüche, wobei die Ansichtsvorrichtung (110) mit einer Dateneingabeeinheit assoziiert ist, durch welche ein Benutzer wenigstens eine gewünschte Abgabelänge eingibt, wobei die gewünschte Länge auf der Ansichtsvorrichtung (110) mit einem Top-Down-Zählmodus angesehen wird, wobei der Fortschritt der Logik-Verarbeitungseinheit die Länge des abgegebenen garnartigen Produkts berechnet.

7. Auslagezusammenbau nach einem der vorangehenden Ansprüche, wobei auf dem Transportgestell (120, 220) ein Schneidemodul für das garnartige Produkt bereitgestellt ist.

8. Auslagezusammenbau nach Anspruch 7, wobei das Schneidemodul hinter der Zähltrommel (121, 221) angeordnet ist.

9. Auslage nach Anspruch 7 oder 8, wobei das Schneidemodul eine Heißklinge (300) aufweist, mit welcher ein Druckhebel (301) kooperiert, montiert sich drehend auf einer Ebene parallel zu der Drehachse der Zähltrommel (121, 221).

10. Auslagezusammenbau nach Anspruch 7 oder 8, wobei das Schneidemodul ein Paar von Schneidebacken (401, 402) aufweist, gelenkig gelagert um ein Gelenk (403), montiert auf einer Platte (404) integral mit dem Transportgestell (120, 220), wobei die Backen (401, 402) Teil von entsprechenden Stangen/Hebel-Mechanismen sind, gesteuert durch einen Betätigungshebel (406), aufgenommen wenigstens teilweise unterhalb der Zählvorrichtung (10, 100).

11. Abgabeverfahren einer Vielzahl von garnartigen Produkten, die nach Länge verkauft werden und auf einer Vielzahl von Spulen gestützt sind, die an einem Auslagemodul montiert sind, umfassend die Schritte:
- Anordnen einer Zählvorrichtung (10, 100), die geeignet ist, um die Länge des garnartigen Produkts, das durch diese hindurchläuft, in einem Abgabeweg des garnartigen Produkts zu messen, **dadurch gekennzeichnet, dass** es ferner umfasst:
- Neigen eines Kipphebels (122, 222), geneigt montiert gegenüberliegend einer sich drehenden Zähltrommel (121, 221) in einer nicht-betriebsfähigen Position, um die Einführung des garnartigen Produkts in die Zählvorrichtung zu erlauben,
- Zurückführen des Kipphebels (122, 222) durch elastische Vorspannmittel in eine betriebsfähige Position drückend gegen die Zähltrommel (121, 221), um so das garnartige Produkt in Kontaktkopplung mit der Zähltrommel (121, 221) zu drücken,
- Erlangen eines Messsignals proportional zu der Drehung der Zähltrommel (121, 221) durch einen Rotationssensor und Senden des Messsignals zu einer Logik-Verarbeitungseinheit, die mit wenigstens einer Ansichtsvorrichtung (110), einer Dateneingabeeinheit und einer Druckeinheit (112) gekoppelt ist,
- Berechnen durch die Logik-Verarbeitungseinheit der Länge des abgegebenen garnartigen Produkts, basierend auf dem empfangenen Messsignal, wenigstens für die Zeitdauer, in welcher der Kipphebel (122, 222) kontinuierlich in der betriebsfähigen Position ist.

12. Verfahren nach Anspruch 11, wobei die betriebsfähige Position des Kipphebels (122, 222) durch die Logik-Verarbeitungseinheit detektiert wird, um die Zeitdauer zu bestimmen, während welcher die Berechnung der Länge des garnartigen Produkts durchgeführt wird.

13. Verfahren nach Anspruch 11 oder 12, wobei es ferner vorgesehen ist, dass die Logik-Verarbeitungseinheit einen Speicher aufweist, in dem eine Datenbasis der Produkte und korrespondierender Preise per Längeneinheit gespeichert wird und, basierend auf der Berechnung der Länge des abgegebenen garnartigen Produkts, die Logik-Einheit die assoziierte Druckeinheit (112) veranlasst, eine Quittung mit Aufzeichnungsdaten des abgegebenen Produkts auszugeben.

14. Verfahren nach einem der Ansprüche 11 bis 13, wobei es ferner bereitgestellt wird, um
- eine gewünschte Länge durch die Eingabeeinheit (110) einzustellen,
- durch die Ansichtsvorrichtung (110) eine Messung der Länge als eine Top-Down-Zählung von der gewünschten Länge basierend auf der Berechnung der Länge eines abgegebenen garnartigen Produkts anzusehen.

15. Zählvorrichtung für einen Auslagezusammenbau und ein Verfahren nach einem der vorangehenden Ansprüche, wobei die Zählvorrichtung eine Zähltrommel (121, 221), montiert in Rotation auf einem Trägergestell (120, 220), einen Kipphebel (122, 222), geneigt montiert gegenüberliegend der Zähltrommel (121, 221) und bereitgestellt mit wenigstens einer Druckgegenrolle (123, 223, 124, 224), geeignet, um das garnartige Produkt in Kontaktkopplung mit der Zähltrommel (121, 221) zu drücken, wenn der Hebel in einer geschlossenen/betriebsfähigen Position durch elastisches Mittel (E) vorgespannt ist, wobei der Hebel in der Lage ist, von der geschlossenen/betriebsfähigen Position zu einer offenen/nicht-betriebsfähigen Position überwindend die Vorspannung des elastischen Mittels (E) umzuschalten, Detektionsmittel der Rotation der Zähltrommel (121, 221), geeignet, um ein Messsignal proportional zu der Drehung der Trommel (121, 221) zu einer Logik-Verarbeitungseinheit auszugeben, die mit einer Ansichtsvorrichtung (110) und einer Druckeinheit (112) gekoppelt ist, wobei die Logik-Verarbeitungseinheit die Länge des abgegebenen garnartigen Produkts basierend auf dem Messsignal, das wenigstens für die Zeitdauer empfangen wird, in welcher der Kipphebel (122, 222) kontinuierlich in der geschlossenen7betriebsfähigen Position ist, berechnet, und wobei ein Produktdetektionssensor ferner bereitgestellt ist, der angepasst ist, um eine Identifikationsmarke zu detektieren, die mit jedem Produkt, das abzugeben ist, assoziiert ist, die angeordnet ist in einer betriebsfähigen Position, welche eingenommen wird durch die Zählvorrichtung, wenn sie das abzugebende Produkt abgibt.

## Revendications

1. Ensemble d'affichage pour une pluralité de produits filiformes vendus par longueur, comprenant au moins un module d'affichage pourvu d'une pluralité de bobines (B) desdits produits filiformes et ayant un chemin de distribution pour chaque produit filiforme sur lequel un dispositif de comptage (10, 100) est installé, apte à mesurer la longueur du produit filiforme qui le traverse, ledit dispositif de comptage comprenant
un tambour de comptage (121, 221) monté en rotation sur un chariot de support (120, 220),
**caractérisé en ce que** ledit dispositif de comptage comprend en outre
un levier oscillant (122, 222) monté basculant à l'opposé dudit tambour de comptage (121, 221) et pourvu d'au moins un contre-rouleau de pression (123, 223, 124, 224) apte à pousser ledit produit filiforme en couplage à contact avec ledit tambour de comptage (121, 221) lorsque le levier est sollicité dans une position fermée/de travail par un moyen élastique (E), ledit levier étant capable de commuter entre ladite position fermée/de travail et une position ouverte/de repos surmontant la sollicitation dudit moyen élastique (E),
un moyen de détection de la rotation dudit tambour de comptage (121, 221) apte à délivrer un signal de mesure proportionnel à la rotation du tambour (121, 221) à une unité de traitement logique en interface avec un dispositif de visualisation (110) et une unité d'impression (112),
la longueur de produit filiforme distribué est calculée par le biais de ladite unité de traitement logique sur la base dudit signal de mesure reçu au moins pendant la période de temps au cours de laquelle ledit levier basculant (122, 222) est continuellement dans ladite position fermée/de travail.

2. Ensemble d'affichage tel que revendiqué dans la revendication 1, dans lequel ledit chariot de support (120, 220) définit une fente traversante (I), entre ledit tambour de comptage (121, 221) et ledit au moins un contre-rouleau (123, 223, 124, 224) avec ledit levier (122, 222) dans une position ouverte/de repos, ainsi qu'une ouverture de sortie (121a, 221a) à partir de laquelle ledit produit filiforme est distribué.

3. Ensemble d'affichage tel que revendiqué dans la revendication 2, dans lequel des moyens d'arrêt (127) sont en outre prévus, commandés par ledit levier basculant (122), apte à obstruer le chemin entre ladite fente (I) et ladite ouverture de sortie (121a) lorsque le levier est dans ladite position ouverte/de repos.

4. Ensemble d'affichage tel que revendiqué dans la revendication 1, 2 ou 3, dans lequel une pluralité de dispositifs de comptage (10, 100) est prévue, au moins en une quantité égale au nombre de rangées de bobines supportées, et un seul dispositif de visualisation (110) avec une unité d'impression (112) correspondante.

5. Ensemble d'affichage tel que revendiqué dans l'une quelconque des revendications précédentes, dans lequel ledit dispositif de comptage (10, 100) est monté coulissant sur un rail de guidage (R) respectif.

6. Ensemble d'affichage tel que revendiqué dans l'une quelconque des revendications précédentes, dans lequel ledit dispositif de visualisation (110) est associé à une unité d'entrée de données à travers laquelle un utilisateur entre au moins une longueur de distribution souhaitée, ladite longueur souhaitée étant visualisée sur ledit dispositif de visualisation (110) avec un mode de comptage descendant avec la progression de calcul de la longueur du produit filiforme distribué par le biais de ladite unité de traitement logique.

7. Ensemble d'affichage tel que revendiqué dans l'une quelconque des revendications précédentes, dans lequel, sur ledit chariot de transport (120, 220) un module de coupe pour ledit produit filiforme est prévu.

8. Ensemble d'affichage tel que revendiqué dans la revendication 7, dans lequel ledit module de coupe est agencé derrière ledit tambour de comptage (121, 221).

9. Ensemble d'affichage tel que revendiqué dans la revendication 7 ou 8, dans lequel ledit module de coupe a une lame chaude (300) avec laquelle coopère un levier de pression (301), monté pivotant sur un plan parallèle à l'axe de rotation dudit tambour de comptage (121, 221).

10. Ensemble d'affichage tel que revendiqué dans la revendication 7 ou 8, dans lequel ledit module de coupe a une paire de mâchoires (401, 402) de cisailles articulées autour d'une charnière (403) montée sur une plaque (404) d'un seul tenant avec ledit chariot de transport (120, 220), lesdites mâchoires (401, 402) faisant partie de mécanismes bielle/manivelle respectifs commandés par un levier d'actionnement (406) logé au moins en partie en dessous du dispositif de comptage (10, 100).

11. Procédé de distribution d'une pluralité de produits filiformes vendus par longueur et supportés sur une pluralité de bobines montées sur un module d'affichage, comprenant les étapes consistant
- à agencer un dispositif de comptage (10, 100), apte à mesurer la longueur du produit filiforme qui le traverse, dans un chemin de distribution dudit produit filiforme, **caractérisé en ce qu'**il comprend en outre le fait
- de basculer un levier oscillant (122, 222), monté basculant à l'opposé d'un tambour de comptage (121, 221) rotatif, dans une position de repos pour permettre l'introduction du produit filiforme dans le dispositif de comptage,
- de ramener, par un moyen de sollicitation élastique, ledit levier basculant (122, 222) dans une position de travail poussant contre ledit tambour de comptage (121, 221), de manière à pousser ledit produit filiforme en couplage à contact avec ledit tambour de comptage (121, 221),
- d'acquérir un signal de mesure proportionnel à la rotation dudit tambour de comptage (121, 221) à travers un capteur de rotation et d'envoyer ledit signal de mesure à une unité de traitement logique en interface avec au moins un dispositif de visualisation (110), une unité d'entrée de données et une unité d'impression (112),
- de calculer à travers ladite unité de traitement logique, la longueur du produit filiforme distribué sur la base dudit signal de mesure reçu, au moins pendant la période de temps au cours de laquelle ledit levier basculant (122, 222) est continuellement dans ladite position de travail.

12. Procédé tel que revendiqué dans la revendication 11, dans lequel ladite position de travail du levier basculant (122, 222) est détectée par ladite unité de traitement logique pour déterminer la période de temps au cours de laquelle effectuer ledit calcul de la longueur de produit filiforme.

13. Procédé tel que revendiqué dans la revendication 11 ou 12, dans lequel il est en outre prévu que ladite unité logique de traitement ait une mémoire dans laquelle une base de données des produits et des prix correspondants par unité de longueur est stockée et, sur la base dudit calcul de la longueur de produit filiforme distribué, ladite unité logique amène l'unité d'impression (112) associée à émettre un reçu avec des données d'enregistrement du produit distribué.

14. Procédé tel que revendiqué dans l'une quelconque des revendications 11 à 13, dans lequel il est en outre prévu
- de fixer une longueur souhaitée à travers l'unité d'entrée (110),
- de visualiser, à travers ledit dispositif de visualisation (110), une mesure de longueur en tant que calcul descendant à partir de ladite longueur souhaitée sur la base dudit calcul de la longueur de produit filiforme distribué.

15. Dispositif de comptage pour un ensemble d'affichage et un procédé tel que revendiqué dans l'une quelconque des revendications précédentes, le dispositif de comptage comprenant un tambour de comptage (121, 221) monté en rotation sur un chariot de support (120, 220), un levier oscillant (122, 222), monté basculant à l'opposé dudit tambour de comptage (121, 221) et pourvu d'au moins un contre-rouleau de pression (123, 223, 124, 224) apte à pousser ledit produit filiforme en couplage à contact avec ledit tambour de comptage (121, 221) lorsque le levier est sollicité dans une position fermée/de travail par un moyen élastique (E), ledit levier étant capable de commuter entre ladite position fermée/de travail et une position ouverte/de repos surmontant la sollicitation dudit moyen élastique (E), un moyen de détection de la rotation dudit tambour de comptage (121, 221) apte à délivrer un signal de mesure proportionnel à la rotation du tambour (121, 221) à une unité de traitement logique en interface avec un dispositif de visualisation (110) et une unité d'impression (112), ladite unité de traitement logique calculant la longueur de produit filiforme distribué sur la base dudit signal de mesure reçu au moins pendant la période de temps au cours de laquelle ledit levier basculant (122, 222) est continuellement dans ladite position fermée/de travail, et
dans lequel un capteur de détection de produit est en outre prévu adapté à détecter une marque d'identification associée à chaque produit à distribuer, qui est agencé dans une position de travail qui est adoptée par ledit dispositif de comptage lorsqu'il distribue ledit produit à distribuer.
